# EUROPEAN PATENT APPLICATION

(11) **EP 4 851 672 A1**
(43) Date of publication of application: **09.12.2026**
(21) Application number: 24922071.6
(22) Date of filing: 09.09.2024
(51) Int. Cl.: G01S 15/46, G01S 15/931

(54) **OBJECT DETECTION DEVICE**

(30) Priority: 31.01.2024 JP 2024013282
(71) Applicant: AISIN CORPORATION, Kariya-shi, Aichi 448-8650 (JP)
(72) Inventor: SUGAE, Ippei, Kariya-shi, Aichi 448-8650 (JP); SASSA, Koichi, Kariya-shi, Aichi 448-8650 (JP); SHIBATA, Naoki, Kariya-shi, Aichi 448-8650 (JP); OKAMOTO, Asako, Kariya-shi, Aichi 448-8650 (JP)
(74) Representative: TBK
(86) International application number: PCT/JP2024/032158
(87) International publication number: WO 2025/163959

(57) **Abstract**

An object detection device includes a transmission and reception unit that transmits a transmission wave and receives a reflection wave generated by the transmission wave being reflected by an object, a coordinate calculation unit that calculates coordinates indicating a position of an object present around a mobile object, on the basis of echo information indicating a time-series change in intensity of the reflection wave, and a determination unit that determines that a low detection target that is to be detected and is lower in height than a threshold value is present, in a case where the coordinates of an object present in an area on a traveling direction side of the mobile object are within a predetermined area determined in advance as an area where horizontal attenuation of the transmission wave is sufficiently small, the same object is continuously detected for a predetermined period, and intensity of the reflection wave is attenuated with travel of the mobile object in the traveling direction.

## Description

### TECHNICAL FIELD

An embodiment of the present invention relates to an object detection device.

### BACKGROUND ART

There is utilized an object detection device that detects an object present around a vehicle on the basis of information acquired by transmission and reception of a wave such as an ultrasonic wave. In such an object detection device, a technique of determining whether or not a detected object is a low object, such as a curbstone that does not collide with a vehicle, on the basis of a difference between theoretical reflection intensity and actual reflection intensity is disclosed (Patent Literature 1).

### CITATIONS LIST

### PATENT LITERATURE

Patent Literature 1: JP 2016-80639 A

### SUMMARY OF INVENTION

### TECHNICAL PROBLEMS

However, in a configuration utilizing the theoretical reflection intensity as in the conventional technique, since the theoretical reflection intensity varies depending on a detection target or the like, it may be difficult to detect a low object with high accuracy.

One of the objectives of the embodiments of the present invention is to provide an object detection device capable of detecting a low object with high accuracy.

### SOLUTIONS TO PROBLEMS

An object detection device as an embodiment of the present invention is an object detection device that detects an object present around a mobile object, the object detection device including a transmission and reception unit that transmits a transmission wave and receives a reflection wave generated by the transmission wave being reflected by an object, a coordinate calculation unit that calculates coordinates indicating a position of an object present around the mobile object, on the basis of echo information indicating a time-series change in intensity of the reflection wave, and a determination unit that determines that a low detection target that is to be detected and is lower in height than a threshold value is present, in a case where the coordinates of an object present in an area on a traveling direction side of the mobile object are within a predetermined area determined in advance as an area where horizontal attenuation of the transmission wave is sufficiently small, the same object is continuously detected for a predetermined period, and intensity of the reflection wave is attenuated with travel of the mobile object in the traveling direction.

According to the above configuration, it is determined that the low detection target that is to be detected and is lower in height than the threshold value is present, in a case where the coordinates of the object present in the area on the traveling direction side of the mobile object are within the area determined in advance as an area where horizontal attenuation of the transmission wave is sufficiently small, the same object is continuously detected for a predetermined period, and intensity of a reflection wave is attenuated with travel of the mobile object. As a result, it is possible to detect with high accuracy the low detection target such as a curbstone having low reflection wave intensity.

Furthermore, in the above configuration, the determination unit may determine whether or not the same object is detected, on the basis of a difference between a plurality of coordinates calculated at predetermined time intervals.

According to the above configuration, it is possible to determine with high accuracy whether or not the same object is detected.

Furthermore, an object detection device as another embodiment of the present invention is an object detection device that detects an object present around a mobile object, the object detection device including a transmission and reception unit that transmits a transmission wave and receives a reflection wave generated by the transmission wave being reflected by an object, a coordinate calculation unit that calculates coordinates indicating a position of an object present around the mobile object, on the basis of echo information indicating a time-series change in intensity of the reflection wave, a distance calculation unit that calculates a distance of an object from the mobile object on the basis of the echo information, a height calculation unit that calculates height of an object on the basis of a plurality of the distances calculated by the distance calculation unit, and a determination unit that determines that a low detection target that is to be detected and is lower in height than a threshold value is present, in a case where the coordinates of an object present in an area on a traveling direction side of the mobile object are within a predetermined area determined in advance as an area where horizontal attenuation of the transmission wave is sufficiently small, the same object is continuously detected for a predetermined period, intensity of the reflection wave is attenuated with travel of the mobile object in the traveling direction, and a state in which an amount of fluctuation in height calculated by the height calculation unit is smaller than a threshold value has continued for a predetermined period.

According to the above configuration, it is determined that a low detection target that is to be detected and is lower in height than a threshold value is present, in a case where the coordinates of the object present in the area on the traveling direction side of the mobile object are within the area determined in advance as an area where horizontal attenuation of the transmission wave is sufficiently small, the same object is continuously detected for a predetermined period, intensity of a reflection wave is attenuated with travel of the mobile object, and a state in which the amount of the fluctuation in the height of the object is smaller than the threshold value has continued for the predetermined period. As a result, it is possible to detect with higher accuracy the low detection target such as a curbstone having low reflection wave intensity.

Furthermore, in the above configuration, the determination unit may determine that the low detection target is present, in a case where intensity of the reflection wave is attenuated by a predetermined amount of change or more as the mobile object travels.

According to the above configuration, it is possible to detect the low detection target with higher accuracy.

### BRIEF DESCRIPTION OF DRAWINGS

FIG. 1 is a diagram showing an example of a configuration of a vehicle according to a first embodiment.
FIG. 2 is a diagram showing an example of a configuration of a vehicle control system according to the first embodiment.
FIG. 3 is a diagram showing an example of a method for calculating a distance with a TOF method according to the first embodiment.
FIG. 4 is a diagram showing an example of a functional configuration of an object detection device according to the first embodiment.
FIG. 5 is a diagram showing an example of a relationship between a change in position of a low detection target and a change in intensity of a reflection wave according to the first embodiment.
FIG. 6 is a flowchart showing an example of processing in the object detection device according to the first embodiment.
FIG. 7 is a diagram showing an example of a functional configuration of an object detection device according to a second embodiment.
FIG. 8 is a flowchart showing an example of processing in the object detection device according to the second embodiment.

### DESCRIPTION OF EMBODIMENTS

Hereinafter, an embodiment of the present disclosure will be described with reference to the drawings. The configurations of the embodiments described below and functions and effects brought about by the configurations are merely an example, and the present invention is not limited to the following description.

### (First embodiment)

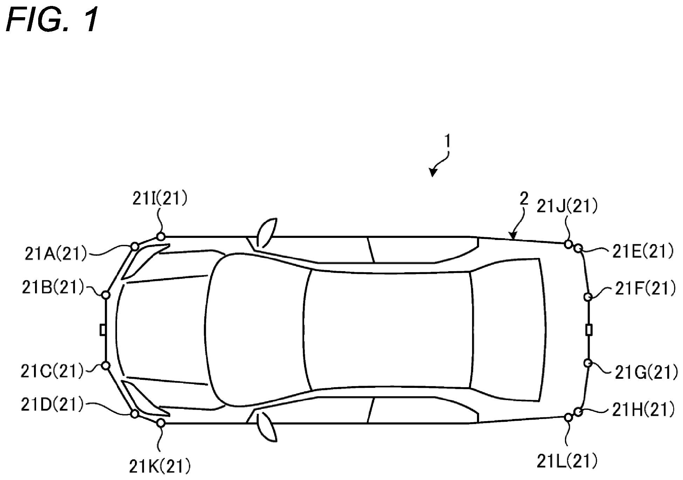

FIG. 1 is a diagram showing an example of a configuration of a vehicle 1 according to a first embodiment. The vehicle 1 is an example of a mobile object on which an object detection device according to the present embodiment is mounted. The object detection device according to the present embodiment is a device that detects an object present around the vehicle 1, on the basis of information about time of flight (TOF), a Doppler shift, or the like acquired by transmission and reception of an ultrasonic wave.

The object detection device according to the present embodiment includes a plurality of transmission and reception units 21A to 21L. Hereinafter, the plurality of transmission and reception units 21A to 21L may be referred to as a transmission and reception unit 21 in a case where it is not necessary to distinguish the plurality of transmission and reception units 21A to 21L. Each transmission and reception unit 21 is installed on a vehicle body 2 as an exterior of the vehicle 1, transmits an ultrasonic wave toward outside of the vehicle body 2, and receives an ultrasonic wave generated by the transmitted ultrasonic wave being reflected by the object present outside the vehicle body 2. Hereinafter, the ultrasonic wave transmitted from the transmission and reception unit 21 may be referred to as a transmission wave, and the ultrasonic wave generated by the transmission wave being reflected by the object may be referred to as a reflection wave.

In the example shown in FIG. 1, of the vehicle body 2, the four transmission and reception units 21A to 21D are arranged at a front-end portion, the four transmission and reception units 21E to 21H are arranged at a rear-end portion, the two transmission and reception units 21I and 21J are arranged on a right side-surface portion, and the two transmission and reception units 21K and 21L are arranged on a left side-surface portion. Note that the number and installation positions of the transmission and reception units 21 are not limited to this example.

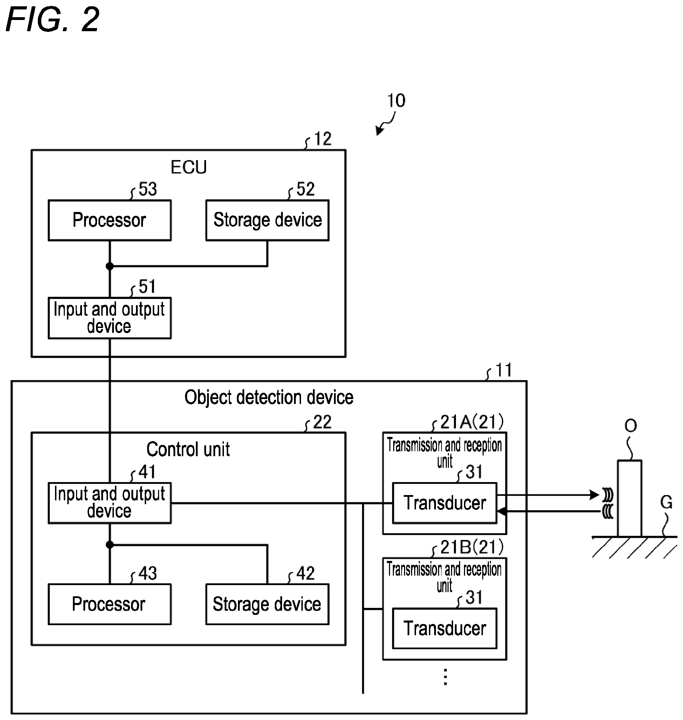

FIG. 2 is a diagram showing an example of a configuration of a vehicle control system 10 according to the first embodiment. On the basis of information output from an object detection device 11, the vehicle control system 10 performs processing for controlling the vehicle 1. The vehicle control system 10 according to the present embodiment includes the object detection device 11 and an ECU 12.

The object detection device 11 includes the plurality of transmission and reception units 21 and a control unit 22. Each transmission and reception unit 21 includes a transducer 31 configured by utilizing a piezoelectric element or the like, an amplifier, and the like, and achieves transmission and reception of an ultrasonic wave with vibration of the transducer 31. Specifically, each transmission and reception unit 21 transmits an ultrasonic wave, which is generated in response to vibration of the transducer 31, as a transmission wave, and detects vibration of the transducer 31 caused by a reflection wave obtained by the transmission wave being reflected by an object such as the detection target O or a road surface G. The vibration of the transducer 31 is converted into an electric signal, and the TOF corresponding to a distance from the transmission and reception unit 21 to the detection target O, the Doppler shift corresponding to a relative speed between the vehicle 1 and the detection target O, and the like can be acquired on the basis of the electric signal.

The detection target O is an object to be detected among objects present around the vehicle 1. The detection target O includes a high detection target that is an object having a height equal to or higher than a threshold value and a low detection target that is an object having a height lower than the threshold value. The threshold value may be, for example, a height from the road surface G to a lowermost portion of the vehicle body 2 (a lower end portion of a bumper or the like). The high detection target may be, for example, another vehicle, a road appurtenance, a wall surface, a person, or the like. The low detection target may be, for example, a curbstone, a parking block, a low step, or the like.

Note that, although there is exemplified a configuration in the example shown in FIG. 2 in which both transmission of a transmission wave and reception of a reflection wave are performed by utilizing a single transducer 31, the configuration of the transmission and reception unit 21 is not limited thereto. For example, as in a configuration in which a transducer for transmitting a transmission wave and a transducer for receiving a reflection wave are separately provided, a transmission side and a reception side may be separated.

The control unit 22 includes an input and output device 41, a storage device 42, and a processor 43. The input and output device 41 is an interface device that allows transmission and reception of information between the control unit 22 and an external device (the transmission and reception units 21, ECU 12, and the like). The storage device 42 includes a main storage device such as a read only memory (ROM) and a random access memory (RAM), and an auxiliary storage device such as a hard disk drive (HDD) and a solid state drive (SSD). The processor 43 is an integrated circuit that executes various kinds of processing for implementing functions of the control unit 22, and may be configured by utilizing, for example, a central processing unit (CPU) that operates according to a program, an application specific integrated circuit (ASIC), a field programmable gate array (FPGA), and the like. The processor 43 executes various arithmetic processing and control processing by reading and executing a program stored in the storage device 42.

The ECU 12 is a unit that executes various kinds of processing for controlling the vehicle 1, on the basis of information acquired from the object detection device 11 and the like. The ECU 12 includes an input and output device 51, a storage device 52, and a processor 53. The input and output device 51 is an interface device that allows transmission and reception of information between the ECU 12 and an external mechanism (the object detection device 11, a drive mechanism, a braking mechanism, a steering mechanism, a transmission mechanism, an in-vehicle display, a speaker, various sensors, and the like). The storage device 52 includes a main storage device such as a ROM and a RAM, and an auxiliary storage device such as an HDD and an SSD. The processor 53 is an integrated circuit that executes various kinds of processing for implementing functions of the ECU 12, and may be configured by utilizing, for example, a CPU, an ASIC, a FPGA, and the like. The processor 53 executes various arithmetic processing and control processing by reading a program stored in the storage device 52.

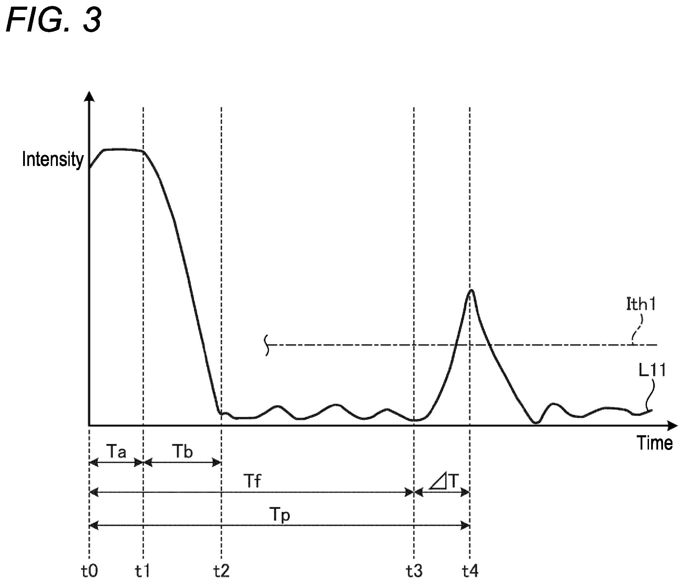

FIG. 3 is a diagram showing an example of a method for calculating a distance with a TOF method according to the first embodiment. FIG. 3 exemplifies an envelope line L11 (an example of echo information) indicating time-course changes in intensity (signal level) of an ultrasonic wave transmitted and received by the transmission and reception unit 21. In the graph shown in FIG. 3, the horizontal axis corresponds to time (TOF), and the vertical axis corresponds to intensity (magnitude of vibration of the transducer 31) of the ultrasonic wave transmitted and received by the transmission and reception unit 21.

The envelope line L11 indicates time-course changes in intensity indicating magnitude of vibration of the transducer 31. It can be understood from the envelope line L11 exemplified in FIG. 3 that the transducer 31 is driven to vibrate from a timing t0 by a period Ta, by which transmission of the transmission wave is completed at a timing t1, and then the vibration of the transducer 31 due to inertia continues while attenuating during a period Tb until a timing t2. Therefore, in the graph shown in FIG. 3, the period Tb corresponds to a so-called reverberation time.

The envelope line L11 reaches a peak at which the magnitude of the vibration of the transducer 31 is equal to or greater than a detection threshold value Ith at a timing t4 after a lapse of a period Tp from the timing t0 at which the transmission of the transmission wave is started. The detection threshold value Ith is a value set to identify whether the vibration of the transducer 31 is caused by reception of a reflection wave from the detection target O, or caused by reception of a reflection wave from an object other than the detection target O (for example, the road surface G, or the like). Note that, here, the detection threshold value Ith is shown as a constant value, but the detection threshold value Ith may be a variable value that changes according to a situation. Vibration having a peak equal to or greater than the detection threshold value Ith can be regarded as being caused by reception of the reflection wave from the detection target O.

The envelope line L11 in this example indicates that the vibration of the transducer 31 attenuates from the timing t4. Therefore, the timing t4 corresponds to a timing at which reception of the reflection wave from the detection target O is completed, in other words, a timing at which the transmission wave transmitted last at the timing t1 returns as a reflection wave.

Furthermore, in the envelope line L11, a timing t3 as a start point of the peak at the timing t4 corresponds to a timing at which reception of the reflection wave from the detection target O starts, in other words, a timing at which a transmission wave first transmitted at the timing t0 returns as a reflection wave. Therefore, a period ΔT between the timing t3 and the timing t4 is equal to the period Ta as a transmission time of the transmission wave.

Thus, in order to obtain a distance from the transmission and reception unit 21 as a transmission and reception source of an ultrasonic wave to the detection target O by utilizing the TOF, it is necessary to obtain a period Tf between the timing t0 at which the transmission wave starts to be transmitted and the timing t3 at which the reflection wave starts to be received. The period Tf can be obtained by subtracting the period ΔT equal to the period Ta as the transmission time of the transmission wave from the period Tp as a difference between the timing t0 and the timing t4 at which intensity of the reflection wave reaches a peak, exceeding the detection threshold value Ith.

The timing t0 at which the transmission wave starts to be transmitted can be easily identified as a timing at which the object detection device 200 starts operation, and the period Ta as the transmission time of the transmission wave is determined in advance with a setting or the like. Therefore, a distance from the vehicle 1 (the transmission and reception unit 21 as a transmission and reception source of an ultrasonic wave) to the detection target O can be obtained by identifying the timing t4 at which the intensity of the reflection wave reaches the peak, being equal to or greater than the detection threshold value Ith Note that the calculation method described above is an example, and the distance from the vehicle 1 to the detection target O is only required to be calculated appropriately using a known or novel method.

Here, intensity of the reflection wave from the low detection target such as a curbstone tends to be low due to directivity of the transmission wave or the like. Therefore, it may be difficult to detect a low detection target with high accuracy only with the method described above. Therefore, the object detection device 11 according to the present embodiment has a function for enabling detection of a low detection target with high accuracy.

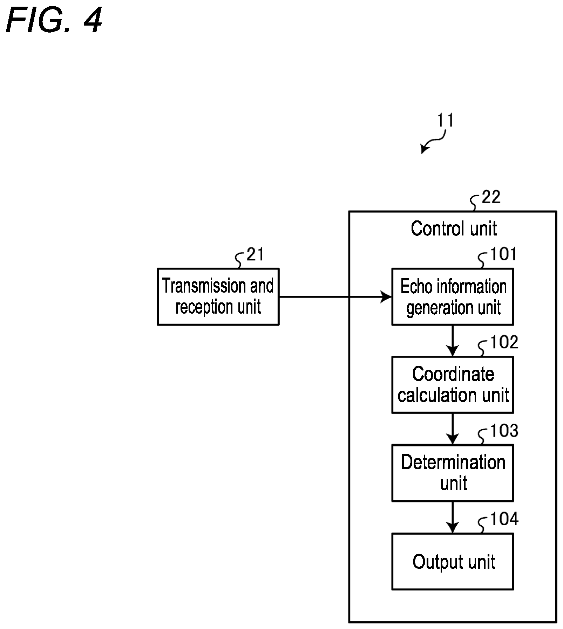

FIG. 4 is a diagram showing an example of a functional configuration of the object detection device 11 according to the first embodiment. The control unit 22 of the object detection device 11 according to the present embodiment includes an echo information generation unit 101, a coordinate calculation unit 102, a determination unit 103, and an output unit 104. These functional units can be implemented, for example, by cooperation of hardware and software (program or the like) of the object detection device 11 as shown in FIG. 2. Furthermore, at least some of these functional units may be implemented by dedicated hardware (circuit).

The echo information generation unit 101 generates echo information indicating a time-series change in intensity of the reflection wave, on the basis of information (signal) acquired from the transmission and reception unit 21.

The coordinate calculation unit 102 calculates coordinates indicating a position of an object present around the vehicle 1, on the basis of the echo information generated by the echo information generation unit 101. The coordinates are information that can identify a relative positional relationship between the transmission and reception unit 21 and the object, and may be, for example, information indicating a position on a plane coordinate system in which a width direction of the vehicle 1 is an X axis and a front-rear direction of the vehicle 1 is a Y axis.

The determination unit 103 determines whether or not an object present around the vehicle 1 is a low detection target, on the basis of information about, for example, coordinates calculated by the coordinate calculation unit 102. Specifically, the determination unit 103 determines that a low detection target that is an object to be detected and is lower in height than a threshold value is present in an area on a traveling direction side of a mobile object, in a case where the coordinates of the object present in the area on the traveling direction side of the vehicle 1 are within a predetermined area determined in advance as an area where horizontal attenuation of the transmission wave is sufficiently small, the same object is continuously detected for a predetermined period, and intensity of a reflection wave is attenuated with travel of the mobile object in a traveling direction.

The output unit 104 outputs a determination result by the determination unit 103, that is, an object detection result including information indicating presence or absence of a low detection target around the vehicle 1 (area on the traveling direction side or the like) to a predetermined mechanism (for example, the ECU 12 or the like).

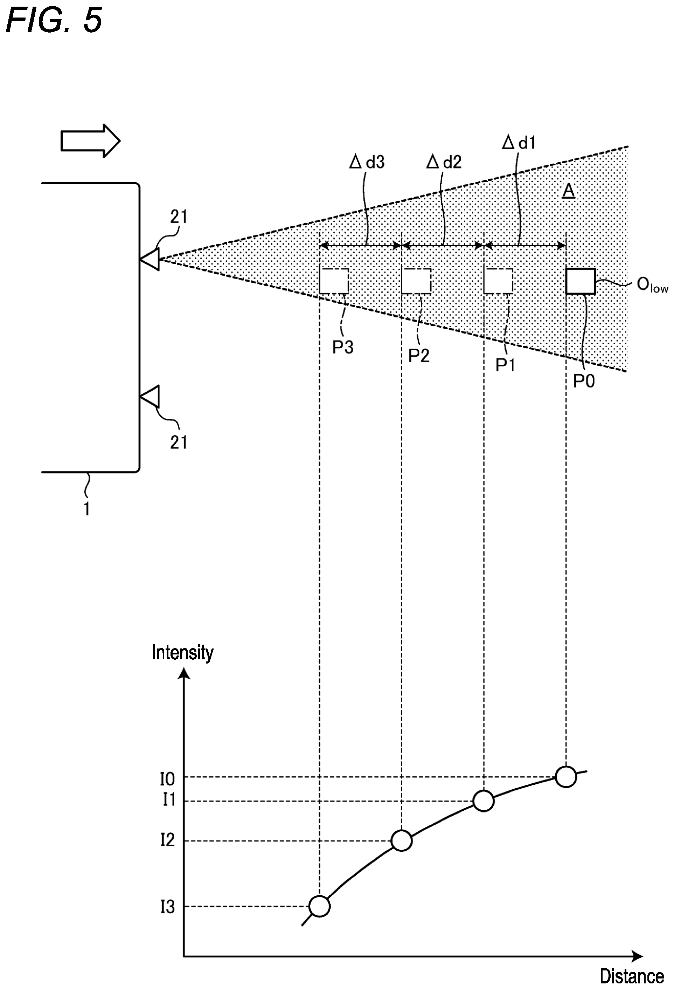

FIG. 5 is a diagram showing an example of a relationship between a change in position of a low detection target Olow and a change in intensity of a reflection wave according to the first embodiment. In the upper part of FIG. 5, a top view showing a relative positional relationship between the vehicle 1 (transmission and reception unit 21) and the low detection target Olow is shown. Here, there is exemplified a state in which the low detection target Olow does not move, but the vehicle 1 travels in a direction of the arrow, that is, in a direction in which the vehicle 1 approaches the low detection target Olow.

A position P0 is a position of the low detection target Olow detected at a time t0. A position P1 is a position of the low detection target Olow detected at a time t1 when a predetermined period has elapsed from the time t0. A position P2 is a position of the low detection target Olow detected at a time t2 when a predetermined period has elapsed from the time t1. A position P3 is a position of the low detection target Olow detected at a time t4 when a predetermined period has elapsed from the time t2. The predetermined period here may be, for example, a period corresponding to one detection cycle. The one detection cycle is, for example, a period from when a transmission wave is transmitted once to when waiting for reception of a reflection wave is completed.

A travel distance Δd1 is a distance from the position P0 to the position P1, a travel distance Δd2 is a distance from the position P1 to the position P2, a travel distance Δd3 is a distance from the position P2 to the position P3, and the travel distance Δd3 is a distance from the position P2 to the position P3. On the basis of these travel distances Δd1 to Δd3, it can be determined whether or not the same object (low detection target Olow) is continuously detected. That is, it is possible to determine whether or not the same object is detected, on the basis of a difference between a plurality of coordinates calculated at predetermined time intervals. For example, in a case where the same object is continuously detected, a value of each of the travel distances Δd1 to Δd3 calculated during the detection is small to some extent, but in a case where another object is detected in a middle of the detection, the value of each of the travel distances Δd1 to Δd3 is likely to rapidly increase. Therefore, while a state in which the value of each of the travel distances Δd1 to Δd3 is smaller than a threshold value has continued, it can be determined that the same object is continuously detected.

Furthermore, the upper part of FIG. 5 exemplifies an area A determined in advance as an area in which horizontal attenuation of a transmission wave transmitted from the transmission and reception unit 21 is sufficiently small. The area A may be determined on the basis of a result of a verification experiment, simulation, or the like performed in advance. Here, a case where coordinates of the low detection target Olow at each of the positions P0 to P3 are present in the area A is exemplified.

In the lower part of FIG. 5, intensities I0 to I3 of a reflection wave corresponding to the positions P0 to P3 of the low detection target Olow are exemplified. As shown in the drawing, intensity of the reflection wave from the low detection target Olow decreases as the vehicle 1 travels in a direction approaching the low detection target Olow, that is, as a distance between the transmission and reception unit 21 and the low detection target Olow decreases. This is due to directivity or the like of the transmission wave transmitted from the transmission and reception unit 21. Therefore, in a case where such a change in intensity of the reflection wave is detected, it can be estimated that there is a high possibility that the low detection target Olow is present in the area on the traveling direction side of the vehicle 1.

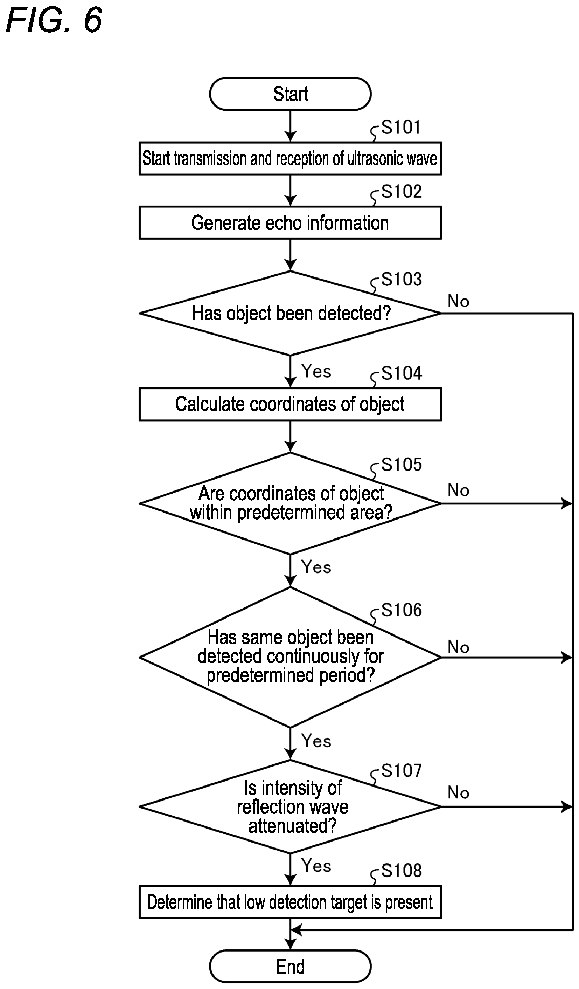

FIG. 6 is a flowchart showing an example of processing in the object detection device 11 according to the first embodiment. When the transmission and reception unit 21 starts transmission and reception of an ultrasonic wave (S101), the echo information generation unit 101 generates echo information indicating a time-series change in a reflection wave, on the basis of information acquired from the transmission and reception unit 21 (S102). On the basis of the echo information, the coordinate calculation unit 102 determines whether or not an object is present around the vehicle 1 (S103), and, if no object is present (S103: No), ends this routine, or, if an object is present (S103: Yes), calculates coordinates of the object (S104).

Thereafter, the determination unit 103 determines whether or not the calculated coordinates of the object are within the predetermined area (area A) (S105), and, if the coordinates are not within the predetermined area (S105: No), ends this routine. If the coordinates are within the predetermined area (S105: Yes), the determination unit 103 determines whether or not the same object has been detected continuously for a predetermined period (S106). Whether or not the same object is continuously detected may be determined on the basis of, for example, a difference between coordinates of a plurality of objects calculated at predetermined time intervals as described above.

If the same object has not been detected continuously for the predetermined period (S106: No), this routine is ended, and if the same object has been detected continuously for the predetermined period (S106: Yes), the determination unit 103 determines whether or not the intensity of the reflection wave is attenuated by a predetermined amount of change or more as the vehicle 1 travels (S107). If the intensity of the reflection wave is not attenuated (S107: No), this routine is ended, and if the intensity of the reflection wave is attenuated (S107: Yes), the determination unit 103 determines that a low detection target Olow is present in the area on the traveling direction side of the vehicle 1 (S108).

As described above, according to the present embodiment, it is determined that the low detection target Olow that is to be detected and is lower in height than a threshold value is present, in a case where the coordinates of the object present in the area on the traveling direction side of the vehicle 1 are within the area A determined in advance as an area where horizontal attenuation of the transmission wave is sufficiently small, the same object is continuously detected for a predetermined period, and intensity of a reflection wave is attenuated with travel of the vehicle 1. As a result, it is possible to detect with high accuracy the low detection target Olow such as a curbstone having low reflection wave intensity.

Hereinafter, another embodiment will be described with reference to the drawings, in which parts the same as or similar to the parts in the first embodiment will be denoted by the same reference signs, and description thereof will be omitted as appropriate.

### (Second embodiment)

An object detection device 11 according to a second embodiment is different from the first embodiment in that a condition for determining presence or absence of a low detection target Olow includes whether or not a state in which fluctuation in height of an object present around a vehicle 1 is small has continued for a predetermined period (predetermined section).

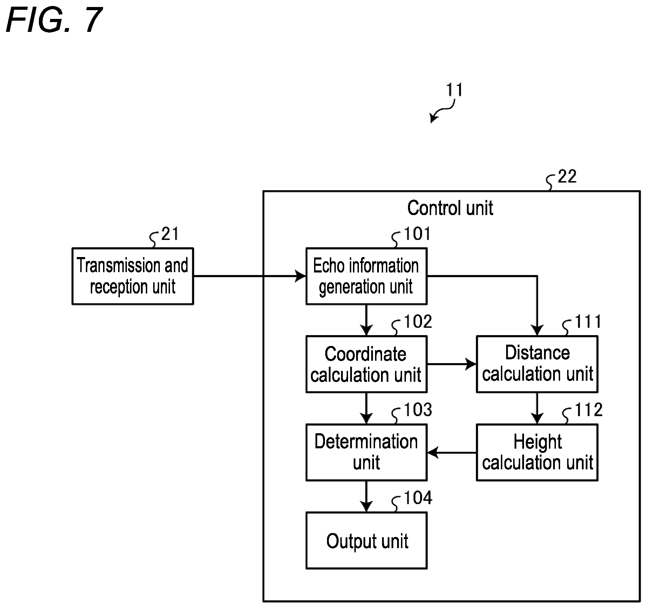

FIG. 7 is a diagram showing an example of a functional configuration of the object detection device 11 according to the second embodiment. A control unit 22 of the object detection device 11 of the present embodiment includes an echo information generation unit 101, a coordinate calculation unit 102, a determination unit 103, an output unit 104, a distance calculation unit 111, and a height calculation unit 112.

A distance calculation unit 111 calculates a distance between the vehicle 1 (transmission and reception unit 21) and an object present around the vehicle 1 on the basis of echo information generated by the echo information generation unit 101 and coordinates of the object calculated by the coordinate calculation unit 102. Calculation of the distance is only required to be achieved by appropriately utilizing a known or novel method, and may be calculated on the basis of information such as TOF, for example.

The height calculation unit 112 calculates height of the object present around the vehicle 1, on the basis of the distance calculated by the distance calculation unit 111. Calculation of the height is only required to be achieved by appropriately utilizing a known or novel method, and may be calculated on the basis of, for example, a difference between two distances calculated for an object present on the same or substantially the same coordinates.

Then, the determination unit 103 according to the present embodiment determines that the low detection target Olow is present in an area on a traveling direction side of the mobile object, in a case where the coordinates of an object present in an area on the traveling direction side of the vehicle 1 are within a predetermined area (area A) determined in advance as an area where horizontal attenuation of the transmission wave is sufficiently small, the same object is continuously detected for a predetermined period, intensity of the reflection wave is attenuated with travel of the vehicle 1 in the traveling direction, and a state in which an amount of fluctuation in height calculated by the height calculation unit 112 is smaller than a threshold value has continued for a predetermined period.

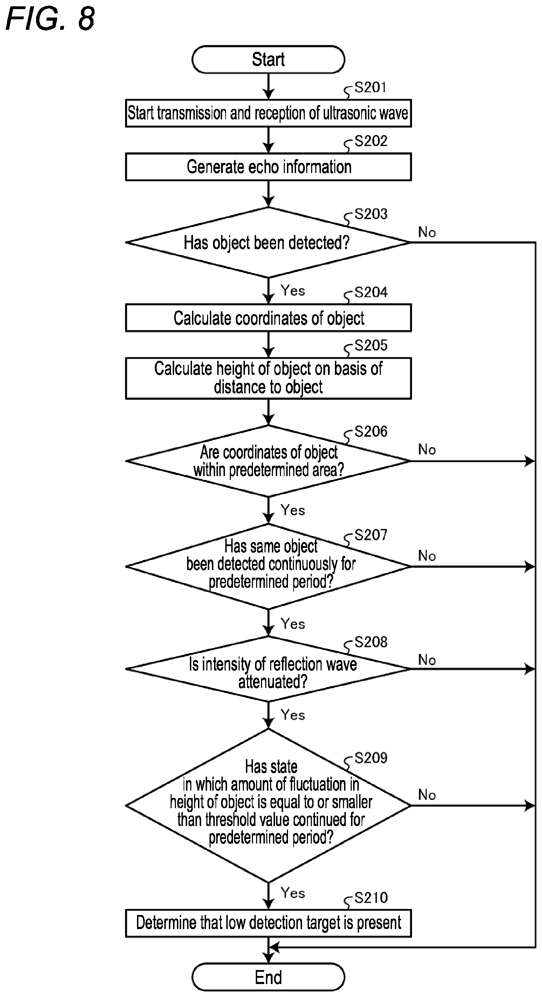

FIG. 8 is a flowchart showing an example of processing in the object detection device 11 according to the second embodiment. When the transmission and reception unit 21 starts transmission and reception of an ultrasonic wave (S201), the echo information generation unit 101 generates echo information indicating a time-series change in a reflection wave, on the basis of information acquired from the transmission and reception unit 21 (S202). On the basis of the echo information, the coordinate calculation unit 102 determines whether or not an object is present around the vehicle 1 (S203), and, if no object is present (S203: No), ends this routine, or, if an object is present (S203: Yes), calculates coordinates of the object (S204).

Thereafter, the distance calculation unit 111 calculates a distance from the vehicle 1 (transmission and reception unit 21) to the object on the basis of the coordinates of the object calculated as described above and the echo information, and the height calculation unit 112 calculates height of the object on the basis of the distance to the object (S205). At this time, the distance calculation unit 111 calculates two distances for an object present on the same or substantially the same coordinates, and the height calculation unit 112 calculates the height of the object on the basis of the two distances.

Thereafter, the determination unit 103 determines whether or not the calculated coordinates of the object are within the predetermined area (area A) (S206), and, if the coordinates are not within the predetermined area (S206: No), ends this routine. If the coordinates are within the predetermined area (S206: Yes), the determination unit 103 determines whether or not the same object has been detected continuously for a predetermined period (S207).

If the same object has not been detected continuously for the predetermined period (S207: No), this routine is ended, and if the same object has been detected continuously for the predetermined period (S207: Yes), the determination unit 103 determines whether or not the intensity of the reflection wave is attenuated by a predetermined amount of change or more as the vehicle 1 travels (S208). If the intensity of the reflection wave is not attenuated (S208: No), this routine is ended, and if the intensity of the reflection wave is attenuated (S208: Yes), the determination unit 103 determines whether or not a state in which an amount of fluctuation in the height of the object is smaller than a threshold value has continued for a predetermined period (S209).

If the state in which the amount of the fluctuation in the height of the object is smaller than the threshold value is not continued for the predetermined period (S209: No), this routine is ended, and if the state in which the amount of the fluctuation in the height of the object is smaller than the threshold value has continued for the predetermined period (S209: Yes), the determination unit 103 determines that a low detection target Olow is present in the area on the traveling direction side of the vehicle 1 (S210).

As described above, according to the present embodiment, it is determined that the low detection target Olow that is to be detected and is lower in height than a threshold value is present, in a case where the coordinates of the object present in the area on the traveling direction side of the vehicle 1 are within the area A determined in advance as an area where horizontal attenuation of the transmission wave is sufficiently small, the same object is continuously detected for a predetermined period, intensity of a reflection wave is attenuated with travel of the vehicle 1, and a state in which the amount of the fluctuation in the height of the object is smaller than the threshold value has continued for the predetermined period. Thus, the determination is made in consideration of the fluctuation in the height of the object, by which the low detection target Olow can be detected with higher accuracy.

A program for causing a computer (for example, a processor 43 or the like) to execute processing for implementing function of the object detection device 11 can be provided by being recorded in a file in an installable format or an executable format, on a computer-readable recording medium such as a compact disc (CD)-ROM, a flexible disk (FD), a CD-R (recordable), and a digital versatile disk (DVD). Furthermore, the program may be provided or distributed via a network such as the Internet.

Note that, in the above embodiment, a configuration in which an ultrasonic wave is utilized as a wave for detecting an object has been described, but the configuration of an object detection device is not limited thereto. For example, a millimeter-wave radar, LiDAR, or the like may be utilized.

The embodiments of the present invention have been described above, but the above-described embodiments and modifications thereof are merely examples, and are not intended to limit the scope of the invention. The above-described novel embodiment and modifications can be implemented in various forms, and various omissions, substitutions, and modifications may be made without departing from the gist of the invention. The above-described embodiments and modifications are included in the scope and gist of the invention, and are included in the invention described in the claims and equivalent scope thereof.

### [Summary of present embodiments]

The present embodiments include at least the following configurations.

The object detection device 11 is an object detection device 11 that detects an object present around a mobile object, the object detection device 11 including a transmission and reception unit 21 that transmits a transmission wave and receives a reflection wave generated by the transmission wave being reflected by an object, a coordinate calculation unit 102 that calculates coordinates indicating a position of an object present around the mobile object, on the basis of echo information indicating a time-series change in intensity of the reflection wave, and a determination unit 103 that determines that a low detection target that is to be detected and is lower in height than a threshold value is present, in a case where the coordinates of an object present in an area on a traveling direction side of the mobile object are within a predetermined area determined in advance as an area where horizontal attenuation of the transmission wave is sufficiently small, the same object is continuously detected for a predetermined period, and intensity of the reflection wave is attenuated with travel of the mobile object in the traveling direction.

With such a configuration, it is determined that a low detection target that is to be detected and is lower in height than the threshold value is present, in a case where the coordinates of the object present in the area on the traveling direction side of the mobile object are within the area determined in advance as an area where horizontal attenuation of the transmission wave is sufficiently small, the same object is continuously detected for a predetermined period, and intensity of a reflection wave is attenuated with travel of the mobile object. As a result, it is possible to detect with high accuracy the low detection target such as a curbstone having low reflection wave intensity.

Furthermore, the determination unit 103 may determine whether or not the same object is detected, on the basis of a difference between a plurality of coordinates calculated at predetermined time intervals.

With such a configuration, it is possible to determine with high accuracy whether or not the same object is detected.

Furthermore, an object detection device 11 is an object detection device 11 that detects an object present around a mobile object, the object detection device 11 including a transmission and reception unit 21 that transmits a transmission wave and receives a reflection wave generated by the transmission wave being reflected by an object, a coordinate calculation unit 102 that calculates coordinates indicating a position of an object present around the mobile object, on the basis of echo information indicating a time-series change in intensity of the reflection wave, a distance calculation unit 111 that calculates a distance of an object from the mobile object on the basis of the echo information, a height calculation unit 112 that calculates height of an object on the basis of a plurality of the distances calculated by the distance calculation unit, and a determination unit 103 that determines that a low detection target that is to be detected and is lower in height than a threshold value is present, in a case where the coordinates of an object present in an area on a traveling direction side of the mobile object are within a predetermined area determined in advance as an area where horizontal attenuation of the transmission wave is sufficiently small, the same object is continuously detected for a predetermined period, intensity of the reflection wave is attenuated with travel of the mobile object in the traveling direction, and a state in which an amount of fluctuation in height calculated by the height calculation unit is smaller than a threshold value has continued for a predetermined period.

With such a configuration, it is determined that a low detection target that is to be detected and is lower in height than a threshold value is present, in a case where the coordinates of the object present in the area on the traveling direction side of the mobile object are within the area determined in advance as an area where horizontal attenuation of the transmission wave is sufficiently small, the same object is continuously detected for a predetermined period, intensity of a reflection wave is attenuated with travel of the mobile object, and a state in which the amount of the fluctuation in the height of the object is smaller than the threshold value has continued for the predetermined period. As a result, it is possible to detect with higher accuracy the low detection target such as a curbstone having low reflection wave intensity.

Furthermore, in the above configuration, the determination unit may determine that the low detection target is present, in a case where intensity of the reflection wave is attenuated by a predetermined amount of change or more as the mobile object travels.

With such a configuration, it is possible to detect the low detection target with higher accuracy.

Note that effects of the dependent claims and the embodiments are additional effects different from effects of the independent claims.

### REFERENCE SIGNS LIST

1: Vehicle, 2: Vehicle body, 10: Vehicle control system, 11: Object detection device, 12: ECU, 21, 21A to 21L: Transmission and reception unit, 22: Control unit, 31: Transducer, 41: Input and output device, 42: Storage device, 43: Processor, 101: Echo information generation unit, 102: Coordinate calculation unit, 103: Determination unit, 104: Output unit, 111: Distance calculation unit, 112: Height calculation unit, A: Area (predetermined area), G: Road surface, O: detection target, and Olow: Low detection target

## Claims

1. An object detection device that detects an object present around a mobile object, the object detection device comprising:
a transmission and reception unit that transmits a transmission wave and receives a reflection wave generated by the transmission wave being reflected by an object;
a coordinate calculation unit that calculates coordinates indicating a position of an object present around the mobile object, on the basis of echo information indicating a time-series change in intensity of the reflection wave; and
a determination unit that determines that a low detection target that is to be detected and is lower in height than a threshold value is present, in a case where the coordinates of an object present in an area on a traveling direction side of the mobile object are within a predetermined area determined in advance as an area where horizontal attenuation of the transmission wave is sufficiently small, the same object is continuously detected for a predetermined period, and intensity of the reflection wave is attenuated with travel of the mobile object in the traveling direction.

2. The object detection device according to claim 1, wherein the determination unit determines whether or not the same object is detected, on the basis of a difference between a plurality of the coordinates calculated at predetermined time intervals.

3. An object detection device that detects an object present around a mobile object, the object detection device comprising:
a transmission and reception unit that transmits a transmission wave and receives a reflection wave generated by the transmission wave being reflected by an object;
a coordinate calculation unit that calculates coordinates indicating a position of an object present around the mobile object, on the basis of echo information indicating a time-series change in intensity of the reflection wave;
a distance calculation unit that calculates a distance of an object from the mobile object on the basis of the echo information;
a height calculation unit that calculates height of an object on the basis of a plurality of the distances calculated by the distance calculation unit; and
a determination unit that determines that a low detection target that is to be detected and is lower in height than a threshold value is present, in a case where the coordinates of an object present in an area on a traveling direction side of the mobile object are within a predetermined area determined in advance as an area where horizontal attenuation of the transmission wave is sufficiently small, the same object is continuously detected for a predetermined period, intensity of the reflection wave is attenuated with travel of the mobile object in the traveling direction, and a state in which an amount of fluctuation in height calculated by the height calculation unit is smaller than a threshold value has continued for a predetermined period.

4. The object detection device according to any one of claims 1 to 3, wherein the determination unit determines that the low detection target is present, in a case where intensity of the reflection wave is attenuated by a predetermined amount of change or more as the mobile object travels.
